# EUROPÄISCHE PATENTSCHRIFT

(11) **EP 1 759 574 B1**
(45) Veröffentlichungstag und Bekanntmachung des Hinweises auf die Patenterteilung: **15.08.2018**
(21) Anmeldenummer: 06012960.8
(22) Anmeldetag: 23.06.2006
(51) Int. Cl.: A01D 41/127, A01D 75/18

(54) **Vorrichtung und Verfahren zur Detektion von Körperschallschwingungen**
Apparatus and method for the detection of impact sound vibrations
Dispositif et procédé pour la détection de vibrations des corps solides

(30) Priorität: 02.09.2005 DE 102005042049
(43) Veröffentlichungstag der Anmeldung: 07.03.2007
(73) Patentinhaber: CLAAS Selbstfahrende Erntemaschinen GmbH, 33428 Harsewinkel (DE)
(72) Erfinder: Behnke, Willi, 33803 Steinhagen (DE); Brune, Markus, 33428 Harsewinkel (DE)

(56) Entgegenhaltungen:
- EP-A1- 1 174 020
- EP-A1- 1 198 982
- EP-A1- 1 221 279
- EP-A1- 1 442 652
- EP-B1- 0 059 745
- DE-A1- 19 725 028

## Beschreibung

Die Erfindung betrifft eine Vorrichtung und ein Verfahren zur Detektion von Körperschallschwingungen in einem Bauteil einer landwirtschaftlichen Erntemaschine nach den Oberbegriffen der Ansprüche 1 und 11.
Aus der DE 197 25 028 ist ein Sensor zur Ermittlung von Körperschallschwingungen bekannt, die durch das Auftreffen von Körnern auf einen Impulsaufnehmer erzeugt werden. Der Sensor besteht aus einem sich über nahezu die gesamte Abscheide- oder Dreschorganbreite erstreckenden plattenförmigen Impulsaufnehmer an dem unterseitig ein Vibrationssensor angeordnet ist, der seinerseits direkt mit einer Auswerteeinheit verbunden ist. Die durch das Auftreffen der Körner auf den Impulsaufnehmer erzeugten Schwingungen werden direkt in den Vibrationssensor eingeleitet und bewirken, dass dieser proportional abhängig von den Schwingungen Spannungen erzeugt, die an eine Auswerteelektronik übermittelt und in dieser ausgewertet werden. Die durch die Körner erzeugten Schwingungen sind abhängig von der Anzahl der auf den Impulsaufnehmer auftreffenden Körner, so dass mit dem Impulsaufnehmer die Menge der zu einem Zeitpunkt oder in einem Zeitintervall auf den Impulsaufnehmer auftreffenden Körner ermittelbar ist.
Nachteilig bei diesem Sensor ist, dass der Ort des Auftreffens der Körner nicht lokalisiert werden kann.
Der Erfindung liegt daher die Aufgabe zugrunde die Nachteile des Standes der Technik zu vermeiden und insbesondere eine Vorrichtung und ein Verfahren vorzuschlagen, bei dem zusätzlich die Orte des Auftreffens der Körner auf dem Impulsaufnehmer ermittelbar sind.

Diese Aufgabe wird erfindungsgemäß durch die kennzeichnenden Merkmale der Ansprüche 1 und 11 gelöst. Weitere vorteilhafte Wirkungen des Erfindungsgegenstandes ergeben sich aus den Unteransprüchen.
Dadurch, dass mit wenigstens einem Zeitnehmer eine Laufzeitdifferenz einer Körperschallschwingung ermittelt wird, die von wenigstens einem ersten Körperschallsensor und wenigstens einem zweiten Körperschallsensor empfangen wird und mit der Laufzeitdifferenz ein Ursprung der Körperschallschwingung ermittelt wird, kann die Verteilung der auf den Impulsnehmer auftreffenden Körner über die Arbeitsbreite des Mähdreschers ermittelt werden.
Vorteilhafterweise startet der Zeitnehmer, sobald einer der Körperschallsensoren die Körperschallschwingung empfängt und der Zeitnehmer stoppt, sobald beide Körperschallsensoren die Körperschallschwingung empfangen, so dass eine sehr präzise Messung der Laufzeitdifferenz möglich ist, die zudem selbsttätig erfolgt.
Eine einfache Ausführung des erfindungsgemäßen Verfahrens ergibt sich, wenn mit der Laufzeitdifferenz und einer vorgegebenen maximal möglichen Laufzeit wenigstens eine Laufzeit berechnet wird, die die Körperschallschwingung von ihrem Ursprung bis zum Empfang am ersten oder am weiteren Körperschallsensor benötigt.
Eine besonders vorteilhafte Ausführung des erfindungsgemäßen Verfahrens ergibt sich, wenn mit der berechneten Laufzeit und einer vorgegebenen Schallgeschwindigkeit der Abstand zwischen dem Ursprung der Schallschwingung und dem Körperschallsensor berechnet wird, und der Abstand den Ursprung der Schallschwingung am Bauteil angibt, so dass auf einfache Weise die Lage des die Körperschallschwingung auslösenden Impulsgebers zum Bauteil berechenbar ist.
Dadurch, dass der Zeitnehmer gestartet wird, wenn der Schalldruck der vom Körperschallsensor empfangenen Körperschallschwingung einen vorgegebenen Spitzenschalldruck überschreitet, wird die Messung auf eine Auswahl von Körperschallschwingungen begrenzt, wie sie beispielsweise von einem bestimmten Impulsgeber ausgelöst werden.
Da die gemessenen Laufzeitdifferenz in der Praxis niemals größer sein kann, als die durch den Abstand der Körperschallsensoren vorgegebene maximal mögliche Laufzeit, wird die Ermittlung der Laufzeitdifferenz abgebrochen, wenn die vom Zeitnehmer gemessene Laufzeitdifferenz die maximal mögliche Laufzeit erreicht oder überschreitet.
Damit das Verfahren nicht durch Störimpulse behindert wird, wird die Ermittlung der Laufzeitdifferenz abgebrochen und der Zeitnehmer zurückgesetzt, wenn der Schalldruck der Körperschallschwingung den vorgegebenen Spitzenschalldruck unterschreitet.
Vorteilhafterweise werden die Abstände zwischen Ursprung der Körperschallschwingungen und Körperschallsensor mit dem Zeitpunkt der Ermittlung der zugehörigen Laufzeitdifferenz in der Steuer- und Auswerteeinheit gespeichert, um zu dokumentieren zu welchem Zeitpunkt und an welcher Stelle des Bauteils die Körperschallschwingung ausgelöst wurde.
Um festzustellen, an welcher Stelle des Bauteils beispielsweise eine Anhäufung von Ursprüngen auftritt, ermittelt die Steuer- und Auswerteeinheit für einen vorgebbaren Zeitraum eine Verteilung der Ursprünge der Körperschallschwingungen auf dem Bauteil.
Wenn die Ermittlung der Laufzeitdifferenz gestartet wird, wenn die Körperschallsensoren keine Körperschallschwingung empfangen, kann der Zeitnehmer durch die Körperschallsensoren ausgelöst werden.
Eine besonders einfache Ausführung der erfindungsgemäßen Vorrichtung ergibt sich, wenn das Bauteil wenigstens einen ersten Körperschallsensor und wenigstens einen zweiten Körperschallsensor zur Messung einer Körperschallschwingung, wenigsten einen Zeitnehmer zur Bestimmung der Laufzeitdifferenz der von dem einen und dem zweiten Körperschallsensor empfangenen Körperschallschwingung und eine Steuer- und Auswerteeinheit zur Ermittlung des Ursprungs der Körperschallschwingung abhängig von der Laufzeitdifferenz umfasst.
Dadurch, dass die Sensoren in einem Abstand voneinander auf dem Bauteil entfernt sind, kann auf einfache Weise die Lage eines Impulsgebers durch eine Laufzeitdifferenzmessung ermittelt werden.
In besonders vorteilhafter Ausgestaltung der erfindungsgemäßen Vorrichtung sind die Körperschallsensoren an den Enden des Bauteils angeordnet, so dass die daraus resultierende maximal mögliche Laufzeit so groß wie möglich gewählt ist.
Vorteilhafterweise sind die Körperschallsensoren mit der Steuer- und Auswerteeinheit verbunden, so dass der Schalldruck der Körperschallschwingung überwacht wird.
Damit der Zeitnehmer automatisch betätigt wird, ist der Zeitnehmer mit der Steuer- und Auswerteeinheit verbunden.
In einer ersten Ausführung der erfindungsgemäßen Vorrichtung ist die landwirtschaftliche Erntemaschine als Mähdrescher ausgeführt und das Bauteil ist ein Impulsaufnehmer zur Ermittlung der Abscheidung eines Erntegutstromes.
In einer vorteilhaften Ausgestaltung der Erfindung erstreckt sich der Impulsaufnehmer über die Arbeitsbreite eines Arbeitsorgans des Mähdreschers und der Impulsaufnehmer erfasst einen Auftreffpunkt eines Korns in Richtung der Arbeitsbreite des Arbeitsorgans, so dass mit den Auftreffpunkten die Abscheidung des Erntegutes über die Breite des Arbeitsorgans ermittelbar ist.
Indem die Summe der beiden von den Körperschallsensoren erzeugten Schalldrücke in der Steuer- und Auswerteeinheit mit einem Grenzschalldruck verglichen werden, kann ermittelt werden, ob die Schallschwingung durch ein auf den Impulsaufnehmer aufprallendes Korn oder durch ein direkt auf einen Körperschallsensor aufprallendes Nichtkornbestandteil ausgelöst wurde.

Um eine Verschmutzung des Impulsaufnehmers festzustellen, werden die von einem Körperschallsensor erfassten Schalldrücke von wenigstens zwei Körperschallschwingungen mit gleichem Ursprung in der Steuer- und Auswerteeinheit miteinander verglichen und durch den Vergleich der Schalldrücke eine unterschiedliche Dämpfung der Körperschallschwingung durch den Impulsaufnehmer ermittelt.

Dadurch, dass die von den Körperschallsensoren erfassten Schalldrücke von wenigstens zwei Körperschallschwingungen mit gleichem Ursprung bei gleichbleibender Dämpfung der Körperschallschwingung durch den Impulsaufnehmer miteinander verglichen werden, kann auf die Eigenschaften des die Körperschallschwingung auslösenden Elementes geschlossen werden.

Weitere vorteilhafte Ausgestaltungen sind Gegenstand weiterer Unteransprüche und werden nachfolgend an Hand des in mehrerer Figuren dargestellten Ausführungsbeispiels näher erläutert.

Es zeigen:
- Fig. 1: eine Seitenansicht eines Mähdreschers
- Fig. 2: eine erfindungsgemäße Vorrichtung zur Detektion wenigstens einer Körperschallschwingung in einem Bauteil,
- Fig. 3: ein Bauteil mit einer Schallschwingung, die zuerst vom weiteren Körperschallsensor empfangen wird.

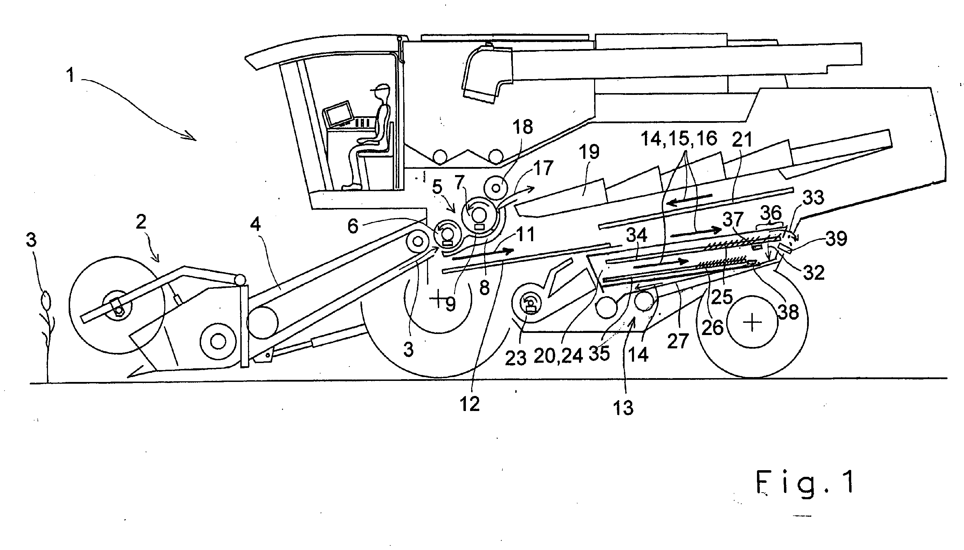

Bei dem in Figur 1 gezeigten Ausführungsbeispiel der Erfindung handelt es sich um eine als selbstfahrender Mähdrescher 1 ausgeführte landwirtschaftlichen Emtemaschine mit einem sogenannten Tangentialdreschwerk 5 und einem nachgeordneten Hordenschüttler 19. Unterhalb des Hordenschüttlers 19 befindet sich eine Reinigungseinrichtung 13. Die Erfindung ist aber ausdrücklich nicht auf derartige ausgeführte Mähdreschertypen beschränkt.
Die Arbeitsweise eines solchen Mähdreschers 1 wird nachfolgend beschrieben. Das Emtegut 3 wird zunächst von einem Schneidwerk 2 aufgenommen, das das Erntegut 3 einem Schrägförderer 4 zuführt. Der Schrägförderer 4 übergibt das Erntegut 3 in seinem rückwärtigen Bereich an die Dreschorgane 6, 7, 8 des Tangentialdreschwerks 5.

Am Eingang des Tangentialdreschwerks 5 befindet sich eine Vorbeschleunigertrommel 6, der in Gutflussrichtung eine Dreschtrommel 7 nachgeordnet ist. Untenseitig werden die Vorbeschleunigertrommel 6 und die Dreschtrommel 7 wenigstens teilweise von einem Dreschkorb 8 ummantelt.
Das aus dem Schrägförderer 4 austretende Erntegut 3 wird durch die Vorbeschleunigertrommel 6 erfasst und weiter von der Dreschtrommel 7 durch den zwischen der Dreschtrommel 7 und dem Dreschkorb 8 ausgebildeten Dreschspalt 9 gezogen. Dabei bearbeitet die Dreschtrommel 7 das Erntegut 3 mechanisch in dessen Folge ein Korn-Spreu-Gemisch 11 am Dreschkorb 8 abgeschieden und über einen schwingend angetriebenen Vorbereitungsboden 12 der Reinigungseinrichtung 13 zugeführt wird, um die Körner von den Nichtkornbestandteilen, d. h. von Halm - und Spreuteilen, zu trennen.
Vom Dreschwerk 5 gelangt der im wesentlichen aus ausgedroschenen Halmen bestehende Gutstrom 17 über die entgegen dem Uhrzeigersinn rotierende Wendetrommel 18 auf den Hordenschüttler 19, der den Gutstrom 17 in den rückwärtigen Bereich des Mähdreschers 1 fördert. Dabei werden die noch im Gutstrom 17 befindlichen Körner 14 sowie eventuell Kurzstroh 15 und Spreu 16 abgetrennt, indem sie durch den Hordenschüttler 19 hindurch auf einen Rücklaufboden 21 fallen. Der Rücklaufboden 21 transportiert Körner 14, Kurzstroh 15 und Spreu 16 zum Vorbereitungsboden 12. Die Körner 14, das Kurzstroh 15 und die Spreu 16 gelangen schließlich ebenfalls über den Vorbereitungsboden 12 in die Reinigungseinrichtung 13.

Die Reinigungseinrichtung 13 besteht aus einem Gebläse 23 und einem als Siebkasten 24 ausgeführten Förder- und Reinigungsorgan 20. Der Siebkasten 24 wird von einem Obersieb 25, einem Untersieb 26 und dem Körnerrücklaufboden 27 gebildet.
Die Abscheidung des Ernteguts 14, 15, 16, das heißt die Trennung der Körner 14 vom Kurzstroh 15 und Spreu 16 erfolgt in der Weise, dass durch die Sieböffnungen 34, 35 im Obersieb 25 und im Untersieb 26 mittels des Gebläses 23 ein Luftstrom von unten nach oben hindurchgefördert wird, welcher den über die Siebe 25, 26 in den hinteren Bereich des Mähdreschers 1 geführten Erntegutstrom auflockert und für das Heraustrennen der spezifisch leichteren Spreu- und Kurzstrohanteile 15, 16 sorgt, während die schweren Erntegutkörner 14 durch die Sieböffnungen 34, 35 fallen. Die Siebe 25, 26 sind teilweise übereinander angeordnet, so dass das Erntegut 14, 15, 16 in zwei Stufen unterschiedlich fein gesiebt wird, wobei die Sieböffnungen 34, 35 der Siebe 25, 26 über Stellglieder verstellbar sind. Das Obersieb 25 ist in der Regel so ausgeführt, dass es in seinem rückwärtigen Bereich, dem sogenannten Überkehrbereich 36, eine größere Maschenweite aufweist.
Am Ende des Obersiebs 25 ist ein erfindungsgemäßes als Impulsaufnehmer 39 ausgeführtes Bauteil angeordnet, das sich über die Arbeitsbreite des Obersiebs 25 erstreckt.
Die auf den Impulsaufnehmer 39 auftreffenden Erntegutkörner verursachen Körperschallschwingungen in dem Impulsaufnehmer 39, wobei mit den erfassten Körperschallschwingungen 42 des Impulsaufnehmers 39 erfindungsgemäß die Auftreffpunkte der auf den Impulsaufnehmer 39 aufprallenden Erntegutkörner 14 bestimmbar sind und mit diesen Auftreffpunkten die Abscheidung eines nicht durch das Obersieb 25 hindurchgefallenen Siebverlusts 33 über die Arbeitsbreite des Obersiebs 25 bestimmt wird.
Eine zweiter Impulsaufnehmer 37 kann unterhalb des Obersiebs 25 im Überkehrbereich 36 angeordnet sein, um die Abscheidung eines durch die Sieböffnungen 34 des Obersiebes 25 hindurchgefallenen Siebdurchgangs 32 über die Arbeitsbreite des Obersiebes 25 zu bestimmen. Unterhalb des zweiten Impulsaufnehmers 37 kann ein weiterer Impulsaufnehmer 38 am Ende des Untersiebs 26 angeordnet sein, mit dem eine Abscheidung eines über das Untersieb 26 geförderten Siebüberlaufs und/oder des durch die Sieböffnungen 34 des Obersiebes 25 hindurchgefallenen Siebdurchgangs 32 über die Arbeitsbreite des Untersiebs 26 bestimmt wird.

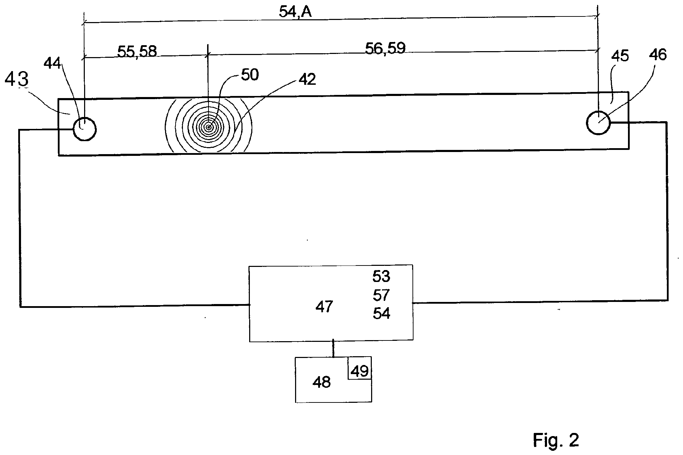

Fig. 2 zeigt eine schematisierte Darstellung einer erfindungsgemäßen Vorrichtung zur Detektion wenigstens einer Körperschallschwingung 42 in einem Bauteil einer selbstfahrenden Erntemaschine. Die Vorrichtung besteht aus einem ersten Körperschallsensor 44, der an einem Ende 43 des Bauteils angeordnet ist und einem weiteren Körperschallsensor 46, der am zweiten Ende 45 des Bauteils angeordnet ist, wobei die Körperschallsensoren 44, 46 im Abstand A voneinander entfernt sind. Die Körperschallsensoren 44, 46 sind mit einer Steuer- und Auswerteeinheit 47 verbunden, an die ein Zeitnehmer 48 angeschlossen ist. Mit dem Zeitnehmer 48 wird eine Laufzeitdifferenz 49 einer Körperschallschwingung 42 ermittelt, die von dem ersten Körperschallsensor 44 und dem zweiten Körperschallsensor 46 zeitversetzt empfangen wird. Die Steuer- und Auswerteeinheit 47 ermittelt erfindungsgemäß in Abhängigkeit von der gemessenen Laufzeitdifferenz 49 den Ursprung 50 der Körperschallschwingung 42, der mit dem Auftreffpunkt eines Erntegutkorns auf einem Impulsgeber 37, 38, 39 identisch ist.
Im Folgenden ist ein erfindungsgemäßes Verfahren zur Detektion wenigstens einer Körperschallschwingung 42 beschrieben. Die Steuer- und Auswerteeinrichtung 47 überwacht die Schalldrücke der von den Körperschallsensoren 44, 46 empfangenen Schallkörperschwingung 42. Zu einem Zeitpunkt, in dem keiner der beiden Körperschallsensoren 44, 46 eine Körperschallschwingung 42 empfängt wird die Ermittlung der Laufzeitdifferenz 49 gestartet. Die Steuer- und Auswerteeinheit 47 vergleicht die Schalldrücke 51,52 der von den die Körperschallsensoren 44, 46 empfangenen Schallkörperschwingung 42 mit einem in der Steuer- und Auswerteeinheit 47 gespeicherten Spitzenschalldruck 53. Liegen die Schalldrücke unterhalb des Spitzenschalldruck 53, so wird die Ermittlung der Laufzeitdifferenz 49 abgebrochen und der Zeitnehmer 48 zurückgesetzt. Wenn die Schalldrücke den Spitzenschalldruck 53 überschreiten, wird die Ermittlung der Laufzeitdifferenz 49 fortgesetzt.

Der Zeitnehmer 48 zur Messung der Laufzeitdifferenz 49 wird gestartet, sobald beispielsweise der erste Körperschallsensor 44 die Körperschallschwingung 42 empfängt und wird angehalten, sobald der weitere Körperschallsensor 46 die Körperschallschwingung 42 zusätzlich empfängt.
Der Zeitnehmer 48 wird ebenfalls gestartet, sobald der weitere Körperschallsensor 46 die Körperschallschwingung 42 empfängt und wird gestoppt, wenn auch der erste Körperschallsensor 44 die Körperschallschwingung 42 empfängt.
Die Steuer- und Auswerteeinrichtung 47 vergleicht die von dem Zeitnehmer 48 gemessene Zeit mit einer in der Steuer- und Auswerteeinheit 47 gespeicherten maximal mögliche Laufzeit 54. Die Ermittlung der Laufzeitdifferenz 49 wird abgebrochen, wenn die gemessene Zeit die maximal mögliche Laufzeit 54 erreicht.

Empfängt der erste Körperschallsensor 44 die Körperschallschwingung 42 vor dem weiteren Körperschallsensor 46 (siehe Fig.2), berechnet die Steuer- und Auswerteeinheit 47 mit der gemessenen Laufzeitdifferenz 49 und der maximal möglichen Laufzeit 54, eine Laufzeit 55 die die Schallschwingung 42 von ihrem Ursprung 50 bis zum ersten Körperschallsensor 44 benötigt. Die Laufzeit 55 beträgt die Hälfte der Differenz der maximal möglichen Laufzeit 54 zur Laufzeitdifferenz 49.
Statt dessen kann die Steuer- und Auswerteeinheit 47 mit der gemessenen Laufzeitdifferenz 49 und der vorgegebenen maximal mögliche Laufzeit 54 auch eine Laufzeit 56 berechnen, die die Schallschwingung 42 von ihrem Ursprung 50 bis zum zweiten Körperschallsensor 46 benötigt.
Die Laufzeit 56 beträgt die Summe aus der Differenz von der maximal möglichen Laufzeit 54 zur Laufzeitdifferenz 49 und der Laufzeitdifferenz 49.

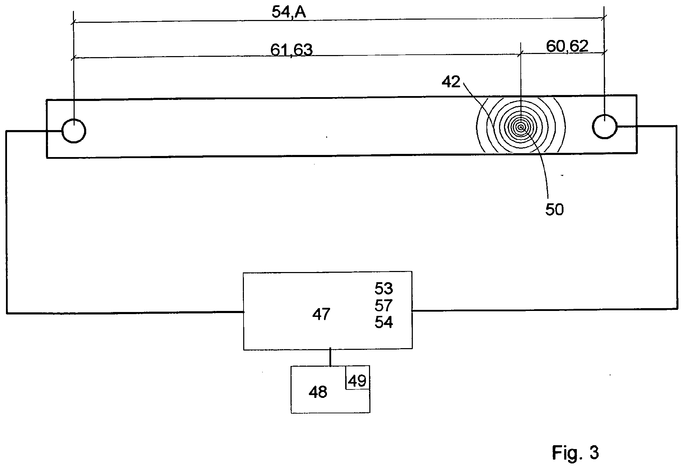

Empfängt der weitere Körperschallsensor 46 bei einer folgenden Messung die Körperschallschwingung 42 vor dem ersten Körperschallsensor 44 (siehe Fig.3), berechnet die Steuer- und Auswerteeinheit 47 mit der gemessenen Laufzeitdifferenz 49 und der maximal möglichen Laufzeit 54, eine Laufzeit 60 die die Schallschwingung 42 von ihrem Ursprung 50 bis zum weiteren Körperschallsensor 46 benötigt. Die Laufzeit 60 beträgt die Hälfte der Differenz der maximal möglichen Laufzeit 54 zur Laufzeitdifferenz 49. Alternativ hierzu kann die Steuer- und Auswerteeinheit 47 mit der gemessenen Laufzeitdifferenz 49 und der vorgegebenen maximal möglichen Laufzeit 54 auch eine Laufzeit 61 berechnen, die die Schallschwingung 42 von ihrem Ursprung 50 bis zum ersten Körperschallsensor 44 benötigt. Die Laufzeit 61 beträgt die Summe aus der Differenz von der maximal möglichen Laufzeit 54 zur Laufzeitdifferenz 49 und der Laufzeitdifferenz 49.
Die Steuer- und Auswerteeinheit 47 berechnet aus den Laufzeiten 55, 56, 60, 61 und einer in der Steuer- und Auswerteeinheit 47 gespeicherten Schallgeschwindigkeit 57 die Abstände 59, 58, 62, 63 zwischen dem Ursprung 50 der Schallschwingung 42 und dem entsprechenden Körperschallsensor 44, 46, wobei ein Abstand 59, 58, 62, 63 den Ursprung 50 der Schallkörperschwingung 42 auf dem Bauteil eindeutig angibt. Es ist auch möglich, dass die Steuer- und Regeleinrichtung 47 die Abstände 59, 58, 62, 63 des Ursprungs 50 der Schallschwingung 42 nur durch das Verhältnis der Laufzeiten 55, 56, 60, 61 zur maximal möglichen Laufzeit 54 eindeutig festlegt. Die Laufzeiten 55, 56, 60, 61 und die zugehörigen Abstände 57, 58, 62, 63 sind proportional zueinander, da die Schallgeschwindigkeit 57 konstant ist.

Die Abstände 59, 58, 62, 63 des Ursprungs 50 der Körperschallschwingungen 42 zum Körperschallsensor 44, 46 werden zeitabhängig in der Steuer- und Auswerteeinheit 47 gespeichert. Aus den gespeicherten Daten ermittelt die Steuer- und Auswerteeinheit 47 für einen vorgebbaren Zeitraum die Querverteilung der Ursprünge 50 der Körperschallschwingungen 42 über die Breite des Bauteils, welche der Querverteilung der Aufprallpunkte über die Breite des Impulsgebers 39 von nacheinander auf den Impulsgeber 39 auftreffenden Erntegutkörnern entspricht.
Die Summe der beiden von den Körperschallsensoren empfangenen Schalldrücke wird in der Steuer- und Auswerteeinheit 47 mit einem Grenzschalldruck 64 verglichen, um festzustellen, ob die Schallschwingung 42 durch ein auf den Impulsaufnehmer aufprallendes Korn und nicht durch ein direkt auf einen Körperschallsensor 44, 46 aufprallenden Nichtkornbestandteil ausgelöst wurden.
In der Steuer- und Auswerteeinheit werden die von einem Körperschallsensor 44, 46 erfassten Schalldrücke mehrerer Körperschallschwingungen 42 mit gleichem Ursprung 50 miteinander verglichen, um festzustellen, ob der Impulsaufnehmer 37, 38, 39 verschmutzt ist und dadurch die Schallschwingungen 42 im Unterschied zum sauberen Impulsaufnehmer 37, 38, 39 stärker dämpft.
Durch den Vergleich der von den von einem Körperschallsensor 44, 46 erfassten Schalldrücke mehrerer Körperschallschwingungen 42 mit gleichem Ursprung 50 kann bei gleichbleibender Dämpfung der Körperschallschwingung 42 durch den Impulsaufnehmer 37, 38, 39 auf die Eigenschaften des die Körperschallschwingung 42 auslösenden Erntegutes geschlossen werden.
Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

**Bezugszeichenliste:**

| | | | |
|---|---|---|---|
| 1 | Mähdrescher | 37 | Impulsaufnehmer |
| 2 | Schneidwerk | 38 | Impulsaufnehmer |
| 3 | Erntegut | 39 | Impulsaufnehmer |
| 4 | Schrägförderer | | |
| 5 | Tangentialdreschwerk | | |
| 6 | Vorbeschleunigertrommel | 42 | Körperschallschwingung |
| 7 | Dreschtrommel | 43 | Ende |
| 8 | Dreschkorb | 44 | erster Körperschallsensor |
| 9 | Dreschspalt | 45 | Ende |
| 11 | Korn-Spreu-Gemisch | 46 | weiterer Körperschallsensor |
| 12 | Vorbereitungsboden | 47 | Steuer- und Auswerteeinheit |
| 13 | Reinigungseinrichtung | 48 | Zeitnehmer |
| 14 | Körner | 49 | Laufzeitdifferenz |
| 15 | Halmteile | 50 | Ursprung |
| 16 | Spreuteile | | |
| 17 | Gutstrom | | |
| 18 | Wendetrommel | 53 | Spitzenschalldruck |
| 19 | Hordenschüttler | 54 | maximal mögliche Laufzeit |
| 20 | Förder- und Reinigungsorgan | 55 | Laufzeit |
| 21 | Rücklaufboden | 56 | Laufzeit |
| 23 | Gebläse | 57 | Schallgeschwindigkeit |
| 24 | Siebkasten | 58 | Abstand |
| 25 | Obersieb | 59 | Abstand |
| 26 | Untersieb | 60 | Laufzeit |
| 27 | Körnerrücklaufboden | 61 | Laufzeit |
| 32 | Siebdurchgang | 62 | Abstand |
| 33 | Siebverlust | 63 | Abstand |
| 34 | Sieböffnung | A | Abstand |
| 35 | Sieböffnung | | |
| 36 | Überkehrbereich | | |

## Patentansprüche

1. Verfahren zur Detektion wenigstens einer Körperschallschwingung (1) in einem Bauteil einer landwirtschaftlichen Erntemaschine, **dadurch gekennzeichnet,**
**dass** mit wenigstens einem Zeitnehmer (48) eine Laufzeitdifferenz (49) einer Körperschallschwingung (42) ermittelt wird, die von wenigstens einem ersten Körperschallsensor (44) und wenigstens einem zweiten Körperschallsensor (46) empfangen wird und über die der Laufzeitdifferenz (49) ein Ursprung (50) der Körperschallschwingung (1) ermittelt wird, wobei in einer Steuer- und Auswerteeinheit (47) die von einem Körperschallsensor (44, 46) erfassten Schalldrücke mehrerer Körperschallschwingungen (42) mit gleichem Ursprung (50) miteinander verglichen und durch den Vergleich der Schalldrücke eine unterschiedliche Dämpfung der Körperschallschwingung (1) durch einen Impulsaufnehmer (37, 38, 39) ermittelt werden.

2. Verfahren nach Anspruch 1,
**dadurch gekennzeichnet,**
**dass** der Zeitnehmer (48) startet, sobald einer der Körperschallsensoren (44, 46) die Körperschallschwingung (42) empfängt und der Zeitnehmer (48) stoppt, sobald beide Körperschallsensoren (44, 46) die Körperschallschwingung (42) empfangen.

3. Verfahren nach wenigstens einem der vorhergehenden Ansprüche,
**dadurch gekennzeichnet,**
**dass** mit der Laufzeitdifferenz (49) und einer vorgegebenen maximal möglichen Laufzeit (54) wenigstens eine Laufzeit (55, 56, 60, 61) berechnet wird, die die Körperschallschwingung (42) von ihrem Ursprung (50) bis zum Empfang am ersten oder am weiteren Körperschallsensor (44, 46) benötigt.

4. Verfahren nach Anspruch 3, **dadurch gekennzeichnet,**
**dass** mit der berechneten Laufzeit (55, 56, 60, 61) und einer vorgegebenen Schallgeschwindigkeit (57) der Abstand (58, 59, 62, 63) zwischen dem Ursprung (50) der Körperschallschwingung (42) und dem Körperschallsensor (44, 46) berechnet wird, und der Abstand (58, 59, 62, 63) den Ursprung (50) der Schallschwingung (42) am Bauteil angibt.

5. Verfahren nach wenigstens einem der vorhergehenden Ansprüche,
**dadurch gekennzeichnet,**
**dass** der Zeitnehmer (48) gestartet wird, wenn der Schalldruck der Körperschallschwingung (42) einen vorgegebenen Spitzenschalldruck (53) überschreitet.

6. Verfahren nach wenigstens einem der vorhergehenden Ansprüche 3, 4, oder 5 wenn abhängig von Anspruch 3, **dadurch gekennzeichnet,**
**dass** die Ermittlung der Laufzeitdifferenz (49) abgebrochen wird, wenn die vom Zeitnehmer (48) gemessene Laufzeitdifferenz (49) die maximal mögliche Laufzeit (54) erreicht oder überschreitet.

7. Verfahren nach wenigstens einem der vorhergehenden Ansprüche 5, oder 6 wenn abhängig von Anspruch 5, **dadurch gekennzeichnet,**
**dass** die Ermittlung der Laufzeitdifferenz (49) abgebrochen und der Zeitnehmer (48) zurückgesetzt wird, wenn der Schalldruck der Körperschallschwingung (42) den vorgegebenen Spitzenschalldruck (53) unterschreitet.

8. Verfahren nach wenigstens einem der vorhergehenden Ansprüche,
**dadurch gekennzeichnet,**
**dass** die Abstände (58, 59, 60, 61) zwischen Ursprung (50) der Körperschallschwingungen (42) und Körperschallsensor (44, 46) mit dem Zeitpunkt der Ermittlung der zugehörigen Laufzeitdifferenz (49) in der Steuer- und Auswerteeinheit (47) gespeichert werden.

9. Verfahren nach wenigstens einem der vorhergehenden Ansprüche,
**dadurch gekennzeichnet,**
**dass** die Steuer- und Auswerteeinheit (47) für einen vorgebbaren Zeitraum eine Verteilung der Ursprünge (50) der Körperschallschwingungen (42) auf dem Bauteil ermittelt.

10. Verfahren nach wenigstens einem der vorhergehenden Ansprüche,
**dadurch gekennzeichnet,**
**dass** die Ermittlung der Laufzeitdifferenz (49) gestartet wird, wenn die Körperschallsensoren (44, 46) keine Körperschallschwingung (42) empfangen.

11. Vorrichtung zur Detektion wenigstens einer Körperschallschwingung (42) in einem Bauteil einer landwirtschaftlichen Erntemaschine, wobei die landwirtschaftliche Erntemaschine als Mähdrescher ausgeführt ist,
**dadurch gekennzeichnet,**
**dass** die Vorrichtung wenigstens einen ersten Körperschallsensor (44) und wenigstens einen zweiten Körperschallsensor (46) zur Messung einer Körperschallschwingung (42), die durch das Auftreffen von Erntegut auf dieses Bauteil hervorgerufen wird, wobei das Bauteil ein Impulsaufnehmer (39) zur Ermittlung der Abscheidung eines Erntegutstromes ist, wenigsten einen Zeitnehmer (48) zur Bestimmung der Laufzeitdifferenz (49) der von dem ersten Körperschallsensor (44) und dem zweiten Körperschallsensor (46) empfangenen Körperschallschwingung (42) und eine Steuer- und Auswerteeinheit (47) zur Ermittlung des Ursprungs (50) der Körperschallschwingung (42) abhängig von der ermittelten Laufzeitdifferenz (49) umfasst, wobei in der Steuer- und Auswerteeinheit (47) die von einem Körperschallsensor (44, 46) erfassten Schalldrücke mehrerer Körperschallschwingungen (42) mit gleichem Ursprung (50) miteinander verglichen werden und durch den Vergleich der Schalldrücke eine unterschiedliche Dämpfung der Körperschallschwingung (1) durch einen Impulsaufnehmer (37, 38, 39) ermittelbar ist.

12. Vorrichtung nach Anspruch 11, **dadurch gekennzeichnet,**
**dass** die Körperschallsensoren (44, 46) in einem Abstand (A) voneinander entfernt auf dem Bauteil (2) angeordnet sind.

13. Vorrichtung nach wenigstens einem der vorhergehenden Ansprüche 11 oder 12, **dadurch gekennzeichnet,**
**dass** die Körperschallsensoren (44, 46) an den Enden (43, 45) des Bauteils angeordnet sind.

14. Vorrichtung nach wenigstens einem der vorhergehenden Ansprüche 11 bis 13, **dadurch gekennzeichnet,**
**dass** die Körperschallsensoren (44, 46) mit der Steuer- und Auswerteeinheit (47) verbunden sind.

15. Vorrichtung nach wenigstens einem der vorhergehenden Ansprüche 11 bis 14, **dadurch gekennzeichnet,**
**dass** die Steuer- und Auswerteeinheit (47) mit dem Zeitnehmer (48) verbunden ist.

16. Vorrichtung nach wenigstens einem der vorhergehenden Ansprüche 11 bis 15, **dadurch gekennzeichnet,**
**dass** sich der Impulsaufnehmer (37, 38, 39) über die Arbeitsbreite des Arbeitsorgans (25, 26) des Mähdreschers erstreckt und der Impulsaufnehmer (37, 38, 39) einen Auftreffpunkt eines Korns in Richtung der Arbeitsbreite des Arbeitsorgans (25, 26) erfasst.

17. Vorrichtung nach wenigstens einem der vorhergehenden Ansprüche 11 bis 16, **dadurch gekennzeichnet,**
**dass** die Summe der beiden in den Körperschallsensoren (44, 46) erzeugten Schalldrücke in der Steuer- und Auswerteeinheit (47) mit einem Grenzschalldruck (64) verglichen werden.

18. Vorrichtung nach wenigstens einem der vorhergehenden Ansprüche 11 bis 17, **dadurch gekennzeichnet,**
**dass** die von den Körperschallsensoren (44, 46) erfassten Schalldrücke von wenigstens zwei Körperschallschwingungen (42) mit gleichem Ursprung (50) bei gleichbleibender Dämpfung der Körperschallschwingung (42) durch den Impulsaufnehmer (37, 38, 39) miteinander verglichen werden.

## Claims

1. A method of detecting at least one structure-borne sound vibration (1) in a component of an agricultural harvester,
**characterised in that**
a transit time difference (49) of a structure-borne sound vibration (42) is ascertained with at least one timer (48), which is received by at least one first structure-borne sound sensor (44) and at least one second structure-borne sound sensor (46) and an origin (50) of the structure-borne sound vibration (1) is ascertained by way of the transit time difference (49), wherein in a control and evaluation unit (47) the sound pressures detected by a structure-borne sound sensor (44, 46) of a plurality of structure-borne sound vibrations (42) with the same origin (50) are compared together and differing damping of the structure-borne sound vibration (1) is ascertained by a pulse detector (37, 38, 39) by the comparison of the sound pressures.

2. A method according to claim 1
**characterised in that**
the timer (48) starts as soon as one of the structure-borne sound sensors (44, 46) receives the structure-borne sound vibration (42) and the timer (48) stops as soon as both structure-borne sound sensors (44, 46) receive the structure-borne sound vibration (42).

3. A method according to at least one of the preceding claims
**characterised in that**
the transit time difference (49) and a predetermined maximum possible transit time (44) are used to calculate at least one transit time (55, 56, 60, 61) which the structure-borne sound vibration (42) requires from its origin (50) until reception at the first or at the second structure-borne sound sensor (44, 46).

4. A method according to claim 3
**characterised in that**
the spacing (58, 59, 62, 63) between the origin (50) of the structure-borne sound vibration (42) and the structure-borne sound sensor (44, 46) is calculated with the calculated transit time (55, 56, 60, 61) and a predetermined sound speed (57) and the spacing (58, 59, 62, 63) specifies the origin (50) of the sound vibration (42) at the component.

5. A method according to at least one of the preceding claims
**characterised in that**
the timer (48) is started when the sound pressure of the structure-borne sound vibration (42) exceeds a predetermined peak sound pressure (53).

6. A method according to at least one of preceding claims 3, 4 or 5 when appendant to claim 3
**characterised in that**
the step of determining the transit time difference (49) is terminated when the transit time difference (49) measured by the timer (48) reaches or exceeds the maximum possible transit time (54).

7. A method according to at least one of preceding claims 5 and 6 when appendant to claim 5
**characterised in that**
the step of determining the transit time difference (49) is terminated and the timer (48) is reset when the sound pressure of the structure-borne sound vibration (42) falls below the predetermined peak sound pressure (53).

8. A method according to at least one of the preceding claims
**characterised in that**
the spacings (58, 59, 60, 61) between the origin (50) of the structure-borne sound vibrations (42) and the structure-borne sound sensors (44, 46) are stored with the moment in time of ascertaining the associated transit time difference (49) in the control and evaluation unit (47).

9. A method according to at least one of the preceding claims
**characterised in that**
the control and evaluation unit (47) ascertains a distribution of the origins (50) of the structure-borne sound vibrations (42) on the component for a predeterminable period of time.

10. A method according to at least one of the preceding claims
**characterised in that**
the step of ascertaining the transit time difference (49) is started when the structure-borne sound sensors (44, 46) receive no structure-borne sound vibration (42).

11. A method of detecting at least one structure-borne sound vibration (42) in a component of an agricultural harvester, wherein the agricultural harvester is in the form of a combine harvester,
**characterised in that**
the apparatus includes at least one first structure-borne sound sensor (44) and at least one second structure-borne sound sensor (46) for measuring a structure-borne sound vibration (42) caused by the impact of crop material against said component, wherein the component is a pulse detector (39) for ascertaining the deposit of a crop material flow, at least one timer (48) for determining the transit time difference (49) of the structure-borne sound vibration (42) received by the first structure-borne sound sensor (44) and the second structure-borne sound sensor (46) and a control and evaluation unit (47) for ascertaining the origin (50) of the structure-borne sound vibration (42) in dependence on the ascertained transit time difference (49), wherein in the control and evaluation unit (47) the sound pressures detected by a structure-borne sound sensor (44, 46) of a plurality of structure-borne sound vibrations (42) with the same origin (50) are compared together and differing damping of the structure-borne sound vibration (1) can be ascertained by a pulse detector (37, 38, 39) by the comparison of the sound pressures.

12. Apparatus according to claim 11
**characterised in that**
the structure-borne sound sensors (44, 46) are arranged on the component (2) at a spacing (A) from each other.

13. Apparatus according to at least one of preceding claims 11 and 12
**characterised in that**
the structure-borne sound sensors (44, 46) are arranged at the ends (43, 45) of the component.

14. Apparatus according to at least one of preceding claims 11 to 13
**characterised in that**
the structure-borne sound sensors (44, 46) are connected to the control and evaluation unit (47).

15. Apparatus according to at least one of preceding claims 11 to 14
**characterised in that**
the control and evaluation unit (47) is connected to the timer (48).

16. Apparatus according to at least one of preceding claims 11 to 15
**characterised in that**
the pulse detector (37, 38, 39) extends over the working width of the working member (25, 26) of the combine harvester and the pulse detector (37, 38, 39) detects an impact point of a grain in the direction of the working width of the working member (25, 26).

17. Apparatus according to at least one of preceding claims 11 to 16
**characterised in that**
the total of the two sound pressures produced in the structure-borne sound sensors (44, 46) are compared in the control and evaluation unit (47) to a limit sound pressure (64).

18. Apparatus according to at least one of preceding claims 11 to 17
**characterised in that**
the sound pressures detected by the structure-borne sound sensors (44, 46) of at least two structure-borne sound vibrations (42) with the same origin (50) are compared together with damping that remains the same of the structure-borne sound vibration (42) by the pulse detector (37, 38, 39).

## Revendications

1. Procédé de détection d'au moins une vibration de bruit solidien (1) dans une pièce d'une machine agricole de récolte, **caractérisé en ce qu'**à l'aide d'au moins un chronomètre (48) est déterminée une différence de temps de propagation (49) d'une vibration de bruit solidien (42) qui est captée par au moins un premier capteur de bruit solidien (44) et par au moins un second capteur de bruit solidien (46), et par l'intermédiaire de la différence de temps de propagation (49) est déterminée une origine (50) de la vibration de bruit solidien (1), les pressions acoustiques de plusieurs vibrations de bruit solidien (42) de même origine (50) recueillies par un capteur de bruit solidien (44, 46) étant comparées dans une unité de commande et d'analyse (47), et la comparaison des pressions acoustiques permettant de déterminer un amortissement différent de la vibration de bruit solidien (1) par l'intermédiaire d'un capteur d'impulsions (37, 38, 39).

2. Procédé selon la revendication 1, **caractérisé en ce que** le chronomètre (48) se met en marche dès qu'un des capteurs de bruit solidien (44, 46) capte la vibration de bruit solidien (42), et le chronomètre (48) s'arrête dès que les deux capteurs de bruit solidien (44, 46) captent la vibration de bruit solidien (42).

3. Procédé selon au moins une des revendications précédentes, **caractérisé en ce qu'**à l'aide de la différence de temps de propagation (49) et d'un temps de propagation maximal possible prédéfini (54) est calculé au moins un temps de propagation (55, 56, 60 61) que nécessite la vibration de bruit solidien (42) depuis son origine (50) jusqu'à sa réception au niveau du premier ou de l'autre capteur de bruit solidien (44, 46).

4. Procédé selon la revendication 3, **caractérisé en ce qu'**à l'aide du temps de propagation calculé (55, 56, 60, 61) et d'une vitesse acoustique prédéfinie (57), la distance (58, 59, 62, 63) entre l'origine (50) de la vibration de bruit solidien (42) et le capteur de bruit solidien (44, 46) est calculée, et la distance (58, 59, 62, 63)) indique l'origine (50) de la vibration acoustique (42) sur la pièce.

5. Procédé selon au moins une des revendications précédentes, **caractérisé en ce que** le chronomètre (48) est mis en marche lorsque la pression acoustique de la vibration de bruit solidien (42) surpasse une pression acoustique maximale prédéfinie (53).

6. Procédé selon au moins une des revendications précédentes 3, 4 ou 5 si dépendantes de la revendication 3, **caractérisé en ce que** la détermination de la différence de temps de propagation (49) est interrompue lorsque la différence de temps de propagation (49) mesurée par le chronomètre (48) atteint ou surpasse le temps de propagation maximal possible (54).

7. Procédé selon au moins une des revendications précédentes 5 ou 6 si dépendantes de la revendication 5, **caractérisé en ce que** la détermination de la différence de temps de propagation (49) est interrompue et le chronomètre (48) est remis zéro lorsque la pression acoustique de la vibration de bruit solidien (42) soupasse la pression acoustique maximale prédéfinie (53).

8. Procédé selon au moins une des revendications précédentes, **caractérisé en ce que** les distances (58, 59, 60, 61) entre l'origine (50) des vibrations de bruit solidien (42) et le capteur de bruit solidien (44, 46) sont mémorisées dans l'unité de commande et d'analyse (47) avec le moment de la détermination de la différence de temps de propagation correspondante (49).

9. Procédé selon au moins une des revendications précédentes, **caractérisé en ce que** l'unité de commande et d'analyse (47) détermine pendant un laps de temps prescriptible une distribution des origines (50) des vibrations de bruit solidien (42) sur la pièce.

10. Procédé selon au moins une des revendications précédentes, **caractérisé en ce que** la détermination de la différence de temps de propagation (49) est lancée lorsque les capteurs de bruit solidien (44, 46) ne captent aucune vibration de bruit solidien (42).

11. Dispositif de détection d'au moins une vibration de bruit solidien (42) dans une pièce d'une machine agricole de récolte, la machine agricole de récolte étant conformée en moissonneuse-batteuse, **caractérisé en ce que** le dispositif comprend au moins un premier capteur de bruit solidien (44) et au moins un second capteur de bruit solidien (46) pour mesurer une vibration de bruit solidien (42) provoquée par l'impact de produit récolté sur cette pièce, la pièce étant un capteur d'impulsions (39) pour déterminer la séparation d'un flux de produit récolté, au moins un chronomètre (48) pour déterminer la différence de temps de propagation (49) de la vibration de bruit solidien (42) captée par le premier capteur de bruit solidien (44) et par le second capteur de bruit solidien (46), et une unité de commande et d'analyse (47) pour déterminer l'origine (50) de la vibration de bruit solidien (42) en fonction de la différence de temps de propagation déterminée (49), les pressions acoustiques de plusieurs vibrations de bruit solidien (42) de même origine (50) recueillies par un capteur de bruit solidien (44, 46) étant comparées dans une unité de commande et d'analyse (47), et la comparaison des pressions acoustiques permettant de déterminer un amortissement différent de la vibration de bruit solidien (1) par l'intermédiaire d'un capteur d'impulsions (37, 38, 39).

12. Dispositif selon la revendication 11, **caractérisé en ce que** les capteurs de bruit solidien (44, 46) sont disposés sur la pièce (2) à une distance (A) l'un de l'autre.

13. Dispositif selon au moins une des revendications précédentes 11 ou 12, **caractérisé en ce que** les capteurs de bruit solidien (44, 46) sont disposés aux extrémités (43, 45) de la pièce.

14. Procédé selon au moins une des revendications précédentes 11 à 13, **caractérisé en ce que** les capteurs de bruit solidien (44, 46) sont connectés à l'unité de commande et d'analyse (47).

15. Dispositif selon au moins une des revendications précédentes 11 à 14, **caractérisé en ce que** l'unité de commande et d'analyse (47) est connectée au chronomètre (48).

16. Dispositif selon au moins une des revendications précédentes 11 à 15, **caractérisé en ce que** le capteur d'impulsions (37, 38, 39) s'étend sur la largeur de travail de l'organe de travail (25, 26) de la moissonneuse-batteuse, et le capteur d'impulsions (37, 38, 39) capte un point d'impact d'un grain dans la direction de la largeur de travail de l'organe de travail (25, 26) .

17. Dispositif selon au moins une des revendications précédentes 11 à 16, **caractérisé en ce que** la somme des deux pressions acoustiques produites dans les capteurs de bruit solidien (44, 46) est comparées dans l'unité de commande et d'analyse (47) avec une pression acoustique limite (64).

18. Dispositif selon au moins une des revendications précédentes 11 à 17, **caractérisé en ce que** les pressions acoustiques d'au moins deux vibrations de bruit solidien (42) de même origine (50) captées par les capteurs de bruit solidien (44, 46) sont comparées entre elles à amortissement constant de la vibration de bruit solidien (42) par l'intermédiaire du capteur d'impulsions (37, 38, 39).
